Europäisches Patentamt

European Patent Office

Office européen des brevets

(11) Veröffentlichungsnummer: **0 291 069**
**A2**

(12) # EUROPÄISCHE PATENTANMELDUNG

(21) Anmeldenummer: **88107697.0**

(22) Anmeldetag: **13.05.88**

(51) Int. Cl.⁴: **F16L 3/00**

(30) Priorität: **15.05.87 DE 3716376**

(43) Veröffentlichungstag der Anmeldung:
**17.11.88 Patentblatt 88/46**

(84) Benannte Vertragsstaaten:
**DE FR GB IT**

(71) Anmelder: **WOCO Franz-Josef Wolf & Co.**
**Sprudelallee 19**
**D-6483 Bad Soden-Salmünster(DE)**

Anmelder: **Daimler-Benz Aktiengesellschaft**
**Postfach 600202 Mercedesstrasse 136**
**D-7000 Stuttgart 60(DE)**

(72) Erfinder: **Wolf, Franz Josef**
**Sprudelallee 19**
**D-6483 Bad Soden-Salmünster(DE)**
Erfinder: **Frischkorn, Heinz**
**Schloss-Strasse 2**
**D-6497 Steinau(DE)**
Erfinder: **Kaminski, Peter**
**Am Rausch 16**
**D-6460 Gelnhausen 4(DE)**
Erfinder: **Feichtiger, Dieter**
**Mittelbühlweg 38**
**D-7031 Aidlingen(DE)**
Erfinder: **Freitag, Elmar**
**Neuffenstrasse 11**
**D-7252 Weil der Stadt-5(DE)**

(74) Vertreter: **Jaeger, Klaus, Dr. et al**
**Jaeger, Steffens & Köster Patentanwälte**
**Pippinplatz 4a**
**D-8035 München-Gauting(DE)**

(54) **Steckerleiste.**

(57) Die Steckerleiste, im einzelnen ausgeführt als Steckerbuchsenleiste, Steckerstiftteilleiste oder als Leiste sowohl mit Steckerbuchsen als auch mit Steckerstiftteilen, besteht aus einer an Sollbruchstellen oder Sollschnittstellen ablängbaren Trägerleiste {1}, insbesondere aus Kunststoff, in der mit Rastelementen {17} versehene Aufnahmeausnehmungen ausgebildet sind, in die hinein komplementär profilierte und mit komplementären Rastelementen {14,15,16} versehene Steckerkupplungsteile {3,4,5} bedarfsentsprechend rastend einsteckbar sind. Die Trägerleiste {1} kann starr, federelastisch oder gummielastisch ausgebildet sind.

## Steckerleiste

Die Erfindung betrifft eine Steckerleiste der im Oberbegriff des Anspruchs 1 genannten Art.

Insbesondere betrifft die Erfindung also eine Steckerleiste, vor allem eine Steckerbuchsenleiste, die auf einem Träger, vor allem einer Trägerleiste, nebeneinanderliegend angeordnete und gehalterte Steckerkupplungsteile enthält, die zumindest im wesentlichen achsparallel nebeneinanderliegend gehaltert sind.

Aus der Praxis bekannte Steckerleisten dieser Art, die sowohl als Steckerstiftteilleisten als auch als Steckerbuchsenteilleisten ausgebildet sein können, weisen den Nachteil auf, dass sie praktisch keine modulare Flexibilität besitzen. Dies bedeutet, dass die bekannten Steckerleisten auch für modular aufgebaute Anwendungssysteme stets identisch aufgebaut sind und bei einer Anschlussbelegung unterhalb der maximal möglichen Anschlussbelegung des Stecker kupplungsteils nur auf den Steckerteilen belegt sind, die für die jeweils realisierte Modulkonfiguration erforderlich sind. Die im Rahmen einer solchen speziellen Modulkonfiguration nicht benötigten potentiellen Verbindungsstellen bleiben zwar kuppelbar, aber ungenutzt. Mit anderen Worten, wenn für einen Modulststecker mit beispielsweise 24 möglichen Anschlüssen für eine bestimmte Modulkonfiguration beispielsweise lediglich drei Anschlüsse benötigt werden, so bedeutet dies, dass 21 vorgesehene Kupplungsmöglichkeiten ungenutzt bleiben. Eine solche Verfahrensweise mag zwar eine Produktionsverbilligung durch Rastervereinfachung bedeuten, bleibt aber praktisch dennoch eine Materialvergeudung, die zunehmend stärker ins Gewicht fällt. Dies wird umso ausgeprägter der Fall sein, wenn die Steckerteile keine Anschlusteile für elektrische Kupplungen im Niederspannungsbereich sind, sondern beispielsweise Hochspannungsstecker oder Stecker aus dem Bereich der Fluidsteuerungstechnik. Steckerteile dieser Art sind aufwendiger aufgebaut, so dass die, unter Bezug auf das vorstehend genannte Beispiel, 21 ungenutzten Steckerteile eine durchaus merkliche Einflussgrösse in den Gesamtkosten für ein Modulsystem bedeuten.

Ausserdem sind die aus der Praxis bekannnten Steckerleisten selbst zudem insofern nicht modular aufgebaut, als sie von Anfang an für jeweils einen bestimmten komplementären Steckerkupplungsteil ausgelegt sind. Bei Bedarf anderer oder gar gemischter Anschlussgrössen, beispielsweise hinsichtlich des Querschnitts des Steckerstiftes, versagt die Anpassbarkeit bekannter Steckerleisten.

Ausgehend von diesem Stand der Technik liegt der Erfindung die Aufgabe zugrunde, eine Steckerleiste der im Oberbegriff des Anspruchs 1 genannten Art hinsichtlich ihrer Anpassbarkeit an Optionen in modularen Systemen zu verbessern.

Zur Lösung dieser Aufgabe schafft die Erfindung eine Steckerleiste der im Oberbegriff des Anspruchs 1 genannten Art und ist durch die im kennzeichnenden Teil des Anspruchs 1 genannten Merkmale gekennzeichnet.

Ausgestaltungen der Erfindung sind Gegenstand der Unteransprüche.

Wesentliches Merkmal der Erfindung ist also zunächst, dass auf ein und dieselbe Trägerleiste einzelne vorgefertigte Steckerkupplungsteile rastend aufgesteckt {"geklipst"} werden können. Dies eröffnet die Möglichkeit, in modularen Systemen die verschiedenen vom Anwender oder Abnehmer geforderten Optionen auch dann rasch realisieren zu können, wenn die Steckerkupplungsteile unterschiedlichste Abmessungen oder andere abweichende Kenndaten, beispielsweise unterschiedliche Anschlussysteme, aufweisen. So können beispielsweise Steckerkupplungsteile mit axiallinearem Durchgang und solche mit gewinkelt zueinander stehenden Eingängen und Ausgängen auf einer Trägerleiste miteinander kombiniert werden. Es können mit einem solchen bedarfsweise bestückten Träger also auch räumliche Teilungen und Verzweigungen eines Leitungsstranges herbeigeführt werden, ohne dass vorgefertigte Spezialteile in grossen Abmessungen bereitgehalten zu werden brauchen.

Dabei kann auch die Trägerleiste selbst in den verschiedensten Varianten konzipiert sein und ermöglicht es so, die Steckerleiste gemäss der Erfindung den unterschiedlichsten Anforderungen der unterschiedlichsten modular aufgebauten Systeme anzupassen. So kann die Trägerleiste beispielsweise ebenso aus einem starren Werkstoff, insbesondere aus Kunststoff oder Metall, bestehen, wie sie aus einem weichelastischen, federelastischen oder gummielastischen Werkstoff bestehen kann, und kann zumindest im wesentlichen eben, kann aber auch raumflächig ausgebildet sein, so beispielsweise U-förmig, polygonal, kreisbogenförmig, geschlossen kreisförmig oder elliptisch. Sind die Stecker gegenkupplungsteile beispielsweise mit guter Masshaltigkeit angeordnet, so wird ein rasches und sauberes Herstellen einer Mehrfachsteckverbindung sicherlich durch die Verwendung starrer und formhaltender sowie masshaltender Werkstoffe für die Trägerleiste erleichtert. Liegen die komplementären Steckerkupplungsteile, in die die Steckerkupplungsteile der Steckerleiste zur Herstellung von Mehrfachverbindungen eingesteckt werden sollen, relativ zueinander nur mit mässiger oder gar im Betrieb gegeneinander schwingender Masshaltigkeit vor, so wird auch für den Werkstoff der Trägerleiste der Steckerleiste gemäss der Erfindung vorzugsweise ein elastischer Werkstoff gewählt, und zwar sowohl ein federelastischer als auch bedarfsweise ein weichelastischer oder gummielastischer Werkstoff, um eine untereinander in Systemverbund spannungsfreie Mehrfachsteckkupplung zu erzielen. Eine federelastische Ausbildung der Steckverbindung untereinander, d.h. auch die Wahl eines federnd elastischen Werkstoffs für die Trägerleiste, wird sich auch dann empfehlen, wenn das Steckerkupplungssystem mechanischen Schwingungen ausgesetzt ist.

Vorzugsweise sind auf der Trägerleiste, wie auch immer diese im einzelnen ausgebildet sein mag, Ausnehmungen, in der Regel rinnenartige Ausnehmungen, ausgebildet, die profilkomplementär zum Profil der Fläche ausgebildet sind, mit der das einzelne aufgesteckte Steckerkupplungsteil auf der Trägerleiste aufliegt. Mit anderen Worten, im Bereich der Trennfuge zwischen dem Steckerkupplungsteil und dem Bereich der Steckfügung auf der Trägerleiste sind die Trennfugenflächen beider Teile in der Weise komplementär zueinander ausgebildet, dass ein flächenbündiger Kontakt zwischen beiden Teilen, nämlich dem Steckerkupplungsteil und dem Aufnahmeteil auf der Trägerleiste, gewährleistet ist. Diese Aufnahmebereiche auf der Trägerleiste können entweder in Form von Ausnehmungen, meist und vorzugsweise rinnenförmigen Ausnehmungen beispielsweise auf einem durchgehenden plattenförmigen oder leistenförmigen Träger, ausgebildet sein, können aber bei der Ausbildung elastischer Trägerleisten vorzugsweise auch als separate Rinnenelemente ausgebildet sein, die untereinander durch federelastische oder gummielastische Verbindungselemente miteinander verbunden sind. Insbesondere bei Ausbildung der Trägerleiste in dieser Art wird die Trägerleiste vorzugsweise entweder fortlaufend als Bandmaterial oder, bei Einzelstückfertigung, mit Maximallänge hergestellt, um dann bei bedarfsbedingter Fertigstellung der Steckerleiste bedarfsweise abgelängt zu werden. Dieser Aufbau bringt insbesondere dann Produktions-und Montagevorteile, wenn die Steckerkupplungsteile keine Teile elektrischer Leitungen, sondern Teile anderer Leitungen, beispielsweise Teile von Schlauch-oder Rohrleitungen, sind, beispielsweise in Fluidsteuerungssystemen, bei denen die einzelnen Steckerkupplungsteile in der Regel wesentlich aufwendiger aufgebaut sind als die überwiegende Zahl elektrischer Steckerteile.

In der Regel werden diese Aufnahmeausnehmungen auf der Trägerleiste so angeordnet und ausgebildet sein, dass die aufgenommenen Steckerkupplungsteile, bezogen auf deren Mittellinie, untereinander auf einer homogenen Fläche, beispielsweise einer Ebene oder einem Zylindermantel, liegen. Bei Anwendungen jedoch, bei denen bei ebener Trägerleiste eine Verkürzung der Baulänge und bei kreisförmiger Trägerleiste eine Verringerung des Gesamtdurchmessers des Steckerleistenteils von Bedeutung ist, sind diese Ausnehmungen vorzugsweise so angeordnet, dass die Mittelachsen der Stekkerkupplungsteile auf der Trägerleiste in der Weise alternierend gegeneinander versetzt sind, dass der Abstand der Mittellinien benachbarter Steckerkupplungsteile voneinander kleiner ist als der Durchmesser dieser Steckerkupplungsteile, so dass also die einzelnen Steckerkupplungsteile auf der Trägerleiste senkrecht zur Bezugsebene, in der Baulänge einzusparen ist, mehr oder minder stark gestapelt sind.

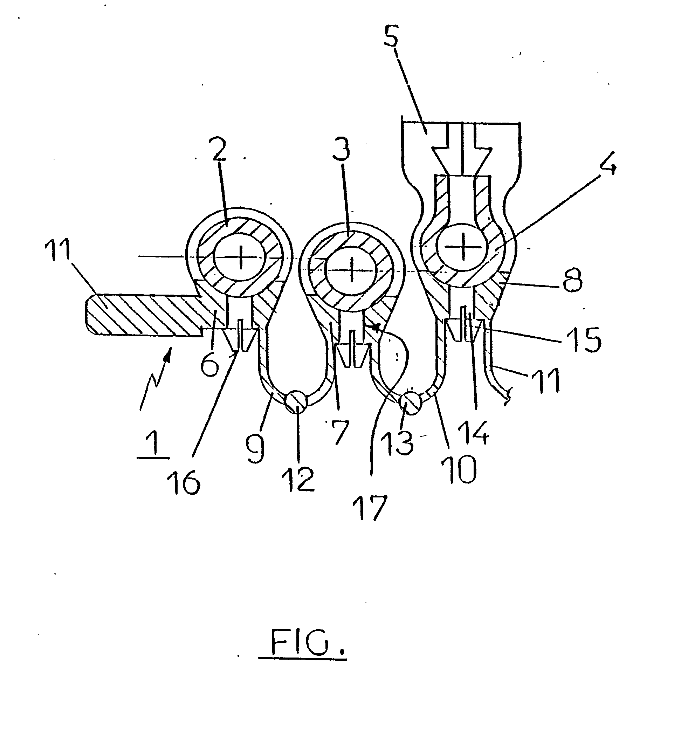

Die Erfindung ist im folgenden anhand eines Ausführungsbeispiels in Verbindung mit der Zeichnung näher erläutert. In dieser Zeichnung zeigt die Fig. im schematischen Querschnitt ein Ausführungsbeispiel einer Steckerbuchsenleiste gemäss der Erfindung.

Ein Ausführungsbeispiel der Steckerleiste gemäss der Erfindung ist in der Fig. im Axialschnitt gezeigt. Die Steckerleiste besteht aus einer Trägerleiste 1 und drei Steckerkupplungsteilen 2,3,4, nämlich zwei linearen Steckerbuchsenteilen 2,3 und einem rechtwinklig abgewinkelten Steckerbuchsenteil 4. Die Steckerbuchsenteile 2,3,4 sind Steckverbindungsbuchsen einer Unterdruckleitung bzw. eines Unterdruckleitungssystems. Zur Herstellung der Steckverbindung werden die komplementären Steckerkupplungsstiftteile in federnde Rasthülsen 5 eingesteckt, die an dem in der Fig. gezeigten Ausführungsbeispiel der rechtwinklig abgewinkelten Steckerbuchse 4 schematisch dargestellt ist, in gleicher Weise jedoch auch an den Steckerbuchsen 2 und 3 ausgebildet sind.

Die Trägerleiste 1 besteht aus einer Folge von, hier drei, rinnenförmigen Aufnahmeteilen 6,7,8, die durch quer zur Längsachse der Aufnahmeteile federnde Verbindungsstege 9, 10 federelastisch miteinander verbunden sind. Das rinnenförmige Aufnahmeteil 6 auf einer Schmalseite der Steckerleiste, in der Darstellung der Fig. auf der linken Seite der Steckerleiste, ist unmittelbar mit einer Montagelasche 11 verbunden, die der Einbauhalterung der gesamten Steckerleiste dient.

In dem in der Fig. gezeigten Ausführungsbeispiel sind der Einfachheit halber lediglich drei Aufnahmeteile 6,7,8 mit zugehörigen Steckerbuchsenteilen 2,3,4 gezeigt. In der Praxis werden bei Verwendung solcher Unterdruckleitungskupplungssteckerleisten wesentlich mehr Buchsenteile enthalten, grössenordnungsmässig 10 bis 20 pro Steckerleiste. Wieviele solcher Steckerbuchsen im Einzelfall für eine bestimmte Steckerleiste benötigt werden, hängt von der modularen Konzeption des Systems ab. Wenn es sich bei dem in der Fig. dargestellten Steckersystem beispielsweise um ein Schlauchsteckersystem für im Kraftfahrzeugbau verwendete Unterdruckleitungen handelt, wie sie zum Stellen von Verriegelungsantrieben, Stellantrieben oder Schlossantrieben verwendet werden, so hängt die erforderliche Auslegung der Steckerleiste konkret von der Anzahl und der Kombination der vom Kraftfahrzeugkäufer in Auftrag gegebenen Optionen für Zusatzeinrichtungen ab. Um diesen Wünschen und Optionen möglichst flexibel begegnen zu können, bezogen auf andere Bereiche der Technik, um generell variablen Anforderungen an Steckverbindungen der hier in Rede stehenden Art variabel nachkommen zu können, wird die Trägerleiste 1 entweder mit Maximallänge oder auch als Bandmaterial hergestellt und dann bedarfsweise abgelängt. Dies kann bei dem hier dargestellten und beschriebenen Ausführungsbeispiel zum Beispiel so erfolgen, dass einfach der an das letzte benötigte rinnenförmige Aufnahmeteil 8 anschliessende federnde Verbindungssteg 11 durchschnitten wird.

In dem hier beschriebenen Ausführungsbeispiel besteht die Trägerleiste 1 aus einem formsteifen Kunststoff, der durch eine rinnenförmige Ausbildung der Verbindungsstege 9,10 die Aufnahmerinnen 6,7,8 federnd miteinander verbindet. Eine mittig in den rinnenförmigen Verbindungsstegen 9,10 angeordnete Verstärkungsrippe 12,13 dient der Abstimmung der Feder und der Stabilisierung der Trägerleiste bzw. der Steckerleiste insgesamt.

Jedes einzelne auf der Trägerleiste 1 befestigte Steckerkupplungsteil 2,3,4 trägt im Bereich seiner Fügefläche eine radial vorspringende Rippe 14. Die Rippe 14 trägt auf ihrer Aussenkante ein über die gesamte axiale Länge der Rippe 14 verlaufendes Rastkopfprofil 15, das aufgrund einer axialen Schlitzung 16 der Rippe 14 quer zu seiner Längserstreckung federnd und ausweichend verformbar ist.

Zur Befestigung der Steckerkupplungsteile 2,3,4 auf der Trägerleiste 1, genauer in den rinnenförmigen Aufnahmeteilen 6,7,8, weisen diese komplementäre Längsschlitze 17 auf, durch die hindurch der Rastkopf 15 des Stegs 14 des Steckerkupplungsteils hindurchgedrückt und nach dem Durchdrücken durch formschlüssigen Hintergriff unlösbar oder lösbar rastend verankert wird.

Bei dem hier beschriebenen Ausführungsbeispiel sind einerseits die Trägerleiste 1 insgesamt mit allen ihren Bestandteilen und andererseits die jeweils einzelnen Steckerbuchsenteile 2,3,4 als Kunststoff-Spritzgiessteile ausgelegt.

Die dieser Beschreibung beigefügte Zusammenfassung ist Bestandteil der ursprünglichen Offenbarung der vorliegenden Anmeldung.

## Ansprüche

1. Steckerleiste, insbesondere Steckerbuchsenleiste, bestehend aus einzelnen Steckerkupplungsteilen {2,3,4}, nämlich Buchsenteilen oder Stiftteilen, und einer Trägerleiste {1}, auf der die Steckerkupplungsteile zumindest im wesentlichen achsparallel nebeneinanderliegend gehalten sind, dadurch **gekennzeichnet,** dass die Steckerkupplungsteile {2,3,4} bedarfsentsprechend auf die Trägerleiste {1} rastend aufgesteckt sind.

2. Steckerleiste nach Anspruch 1, dadurch **gekennzeichnet,** dass die Trägerleiste {1} aus einem starren oder federelastischen Werkstoff, insbesondere Kunststoff, besteht und eben, U-förmig gebogen, elliptisch oder kreisbogenförmig gebogen ausgebildet ist.

3. Steckerleiste nach Anspruch 1, dadurch **gekennzeichnet,** dass die Trägerleiste {1} aus einem gummielastischen Werkstoff besteht.

4. Steckerleiste nach einem der Ansprüche 1 bis 3, dadurch **gekennzeichnet,** dass die Trägerleiste {1} bedarfsentsprechend ablängbar ist.

5. Steckerleiste nach Anspruch 4, dadurch **gekennzeichnet,** dass die Trägerleiste {1} zum Ablängen Sollbruchstellen oder Sollschnittstellen aufweist.

6. Steckerleiste nach einem der Ansprüche 1 bis 5, dadurch **gekennzeichnet,** dass ein und dieselbe Trägerleiste {1} auch gleichzeitig nebeneinander mit voneinander verschiedenen Typen und Arten von Steckerkupplungsteilen {2,3;4} bestückbar ist.

7. Steckerleiste nach einem der Ansprüche 1 bis 6, dadurch **gekennzeichnet,** dass auf der Trägerleiste {1} in Ausnehmungen Aufnahmeflächen ausgebildet sind, die profilkomplementär zur aufzunehmenden Trennfugenfläche des Steckerkupplungsteils {2,3,4} ausgebildet sind.

8. Steckerleiste nach Anspruch 7, dadurch **gekennzeichnet,** dass die Trägerleiste {1} in jeder profilierten Ausnehmung mit einem Langlochschlitz {17} versehen ist, in den eine mit hintergreifender Rastkrone {15} versehene, insbesondere längsgeschlitzte {16} Feder {14} des Steckerkupplungsteils {2,3,4} einrastend eindrückbar ist.

9. Steckerleiste nach einem der Ansprüche 1 bis 8, dadurch **gekennzeichnet,** dass die beiden einem Steckerkupplungsteil {3} auf der Trägerleiste {1} jeweils nächstliegenden {2,4} benachbarten Steckerkupplungsteile einen anderen, nämlich grössseren oder kleineren Abstand zur Mittelfläche der Trägerleiste {1} aufweisen als das mittlere Steckerkupplungsteil, wobei die Mittelfläche diejenige Fläche ist, die flächenparallel zu der durch die Mittelachsen der Steckerkupplungsteile definierten Fläche durch die Mittellinie der Trägerleiste verläuft, die durch die Umhüllende der Trägerleiste definiert ist.

10. Steckerleiste nach einem der Ansprüche 7 bis 9,
dadurch **gekennzeichnet,**
dass die trennfugenkomplementären Ausnehmungen der Trägerleiste {1} als rinnenförmige Aufnahmeteile {6,7,8} ausgebildet sind, die durch quer zur Längsachse der rinnenförmigen Aufnahmeteile {6,7,8} federnde Verbindungsstege {9,10}, insbesondere rinnenförmige Verbindungsstege, miteinander verbunden sind.

11. Steckerleiste nach einem der Ansprüche 1 bis 10,
dadurch **gekennzeichnet,**
dass die bzw. zumindest eines der Steckerkupplungsteile {4} abgewinkelt, insbesondere rechtwinklig abgewinkelt, zur Hauptfläche der Trägerleiste {1} ausgebildet sind bzw. ist.

12. Steckerleiste nach einem der Ansprüche 1 bis 11,
dadurch **gekennzeichnet,**
dass die Steckerkupplungsteile {2,3,4} Teile einer Schlauchsteckkupplung sind.

FIG.